**Europäisches Patentamt**

**European Patent Office**

**Office européen des brevets**

(11) Numéro de publication : **0 478 415 A1**

# (12) DEMANDE DE BREVET EUROPEEN

(21) Numéro de dépôt : **91402464.1**

(22) Date de dépôt : **17.09.91**

(51) Int. Cl.$^5$ : **B29C 65/00, C08J 5/12**

(30) Priorité : **24.09.90 FR 9011741**

(43) Date de publication de la demande :
**01.04.92 Bulletin 92/14**

(84) Etats contractants désignés :
**BE DE ES GB IT LU NL SE**

(71) Demandeur : **HUTCHINSON S.A. une Société Anonyme dotée d'un Conseil de Surveillance et d'un Directoire
2, rue Balzac
F-75008 Paris (FR)**

(72) Inventeur : **Malnoult, Hervé
16, Allée de la Résidence du Lac
F-45200 Montargis (FR)**

(74) Mandataire : **Orès, Bernard et al
Cabinet ORES 6, Avenue de Messine
F-75008 Paris (FR)**

(54) **Procédé et dispositif de fabrication de pieces à base d'élastomère et pièces obtenues par mise en oeuvre de ce procédé.**

(57)    Procédé de fabrication d'une pièce à base de matériau élastomère ou d'élastomère(s) thermoplastique(s) obtenue par extrusion d'une ébauche, puis solidarisation entre elles de deux zones au moins de ladite ébauche réalisée par soudure de deux couches minces (5, 6) de matière plastique non polaire rapportées sur lesdites zones ensuite rapprochées et amenées au contact l'une de l'autre.

La solidarisation est conduite en maintenant au contact lesdites couches minces (5, 6) simultanément à l'application d'un champ haute-fréquence ou d'une impulsion d'énergie.

Application à l'industrie automobile, notamment.

EP 0 478 415 A1

FIG.1

L'invention a pour objet un procédé de fabrication de pièces à base d'élastomère et les pièces obtenues par mise en oeuvre de ce procédé et elle s'applique notamment, mais non exclusivement, aux pièces à base d'élastomère comme du caoutchouc naturel ou synthétique utilisés seuls ou suivant différents coupages, ou encore aux pièces à base de matériau(x) du type des élastomères thermoplastiques ou analogues.

Elle trouve une utilisation particulièrement intéressante dans le domaine des pièces obtenues par un procédé d'extrusion ou de coextrusion du ou de leur(s) matériau(x) constitutif(s) et, principalement, dans celui des pièces comme des profilés mis en oeuvre dans divers domaines industriels pour servir de joints, par exemple de joints d'étanchéité, dans le domaine de l'industrie automobile. Dans ce domaine, le besoin existe d'un joint d'étanchéité destiné à être monté entre une porte et une caisse d'automobile, un tel joint extrudé en caoutchouc comprenant généralement une pince ou pied de fixation sur le pourtour de la porte ou de la caisse d'automobile et une lèvre d'étanchéité maintenue repliée contre un prolongement de la pince ou pied par un collage discontinu. Il est habituellement livré aux constructeurs d'automobiles en tronçon d'une longueur de plusieurs mètres qui est ensuite collé à ses extrémités pour former une boucle sans fin, d'une part, et en certains points de sa longueur, d'autre part, à l'aide de colles du type cyanoacrylate, ce qui est une opération relativement longue mettant en oeuvre des produits qu'il convient de manipuler avec précaution.

Etant donné que l'on cherche à réduire le plus possible les coûts de fabrication liés à la main d'oeuvre, d'une part, à réduire autant que faire se peut l'utilisation de produits difficiles à manipuler, d'autre part, le problème se pose de fournir un procédé permettant l'élaboration de tels joints et, d'une façon générale, de pièces à base d'élastomère comme du caoutchouc ou d'élastomère(s) thermoplastique(s) dont certaines parties doivent être reliées entre elles, quine présente pas les inconvénients mentionnés du procédé connu.

Si l'on a déjà proposé, dans EP-A-0 196 267, de réunir entre elles des feuilles de caoutchouc, ce document vise de manière très spécifique un dispositif pour des feuilles destinées à former des membranes utilisables en tant que geo-membranes ou plus particulièrement pour la couverture de toiture et on ne trouve pas, dans ce document, des moyens pour obtenir la liaison de bandes adhésives associées aux feuilles de caoutchouc de façon simple et industrielle étant donné que les moyens divulgués sont dissociés en moyens d'application de chaleur et moyens d'application de pression, les moyens d'application de chaleur étant du type pistolet à air chaud.

C'est, par conséquent, un but général de l'invention de fournir un procédé de fabrication de pièces à base d'élastomère ou d'élastomère(s) thermoplastique(s) qui apporte une solution au problème posé.

C'est, aussi, un but de l'invention de fournir un tel procédé dont la mise en oeuvre soit simple et sûre.

Un procédé de fabrication d'une pièce à base de matériau élastomère ou d'élastomère(s) thermoplastique(s) obtenue par extrusion d'une ébauche, puis solidarisation entre elles de deux zones au moins de ladite ébauche, réalisée par soudure de deux couches minces de matière plastique non polaire rapportées sur lesdites zones ensuite rapprochées et amenées au contact l'une de l'autre, est caractérisé en ce que ladite solidarisation est conduite en maintenant au contact lesdites couches minces simultanément à l'application d'un champ haute-fréquence ou d'une impulsion d'énergie.

Dans un mode de mise en oeuvre préféré du procédé selon l'invention, les couches minces de matière plastique non polaire sont coextrudées avec l'ébauche, le matériau constitutif de cette dernière étant choisi parmi les élastomères du type caoutchouc naturel ou synthétique, les élastomères thermoplastiques, ou les coupages de ces matières, tandis que le matériau des couches minces est une matière plastique non polaire, compatible avec ledit élastomère ou élastomère(s) thermoplastique(s).

Dans une réalisation avantageuse, l'élastomère est un caoutchouc du type des EPDM et la matière plastique non polaire est un polyéthylène.

Pour la mise en oeuvre du procédé, l'invention prévoit de réaliser la soudure par haute-fréquence ou par impulsion d'énergie à l'aide d'un dispositif à deux mâchoires, dont l'une est une électrode émettrice HF, fixe, et l'autre une électrode climatisée, mobile, le dispositif étant caractérisé en ce que les moyens qu'il comprend pour l'application du champ haute fréquence ou l'impulsion d'énergie sont également prévus pour maintenir au contact sous pression l'une contre l'autre les zones garnies des couches minces en matière plastique non polaire.

L'invention a aussi pour objets les pièces à base de matériau élastomère, notamment en caoutchouc, ou d'élastomère (s) thermoplastique (s) comme des joints d'étanchéité, comportant une lèvre et un pied ou pince de montage sur un support, obtenues par mise en oeuvre du procédé précité et caractérisées en ce qu'elles comprennent sur deux zones en vis-à-vis des couches minces de matière plastique polaire coextrudées ou rapportées sur lesdites zones, puis soudées l'une à l'autre par utilisation de haute fréquence ou par impulsion d'énergie.

Selon une disposition préférée de l'invention, la matière plastique non polaire est un polyéthylène.

Selon une autre disposition préférée le caoutchouc ou les élastomères thermoplastiques sont choisis parmi les EPDM ou les coupages NBR/PVC ou EPDM/TPR, la matière plastique non polaire étant un polyéthylène ou un polypropylène.

L'invention sera bien comprise à l'aide du complément de description qui suit, fait en référence au dessin annexé dans lequel :

– la figure 1 est une coupe transversale d'une pièce obtenue à l'aide d'un procédé selon l'invention à un premier stade de fabrication ; et

– la figure 2 est une coupe transversale de la même pièce à un stade ultérieur de fabrication.

La pièce à base de matériau élastomère ou d'élastomère(s) thermoplastique(s) décrite et représentée à titre d'exemple, auquel ne doit être attaché aucun caractère limitatif, est un joint en caoutchouc J destiné à être monté sur la caisse d'un véhicule automobile pour faire étanchéité entre ladite caisse et la porte du véhicule. Le joint J comporte un pied ou pince de montage 1 à section droite en forme générale de C renforcé par une armature métallique 2. Du pied 1 est solidaire une lèvre 11 d'une part et, d'autre part, une lèvre d'étanchéité 3 comportant une partie 31 de raccord du pied 1 et une partie 32 repliée sur la précédente munie sur son extrémité libre et une partie de sa surface extérieure d'un floc 7 de protection à l'encontre des chocs et autres phénomènes pouvant amener une abrasion de la peinture de caisse ou de porte.

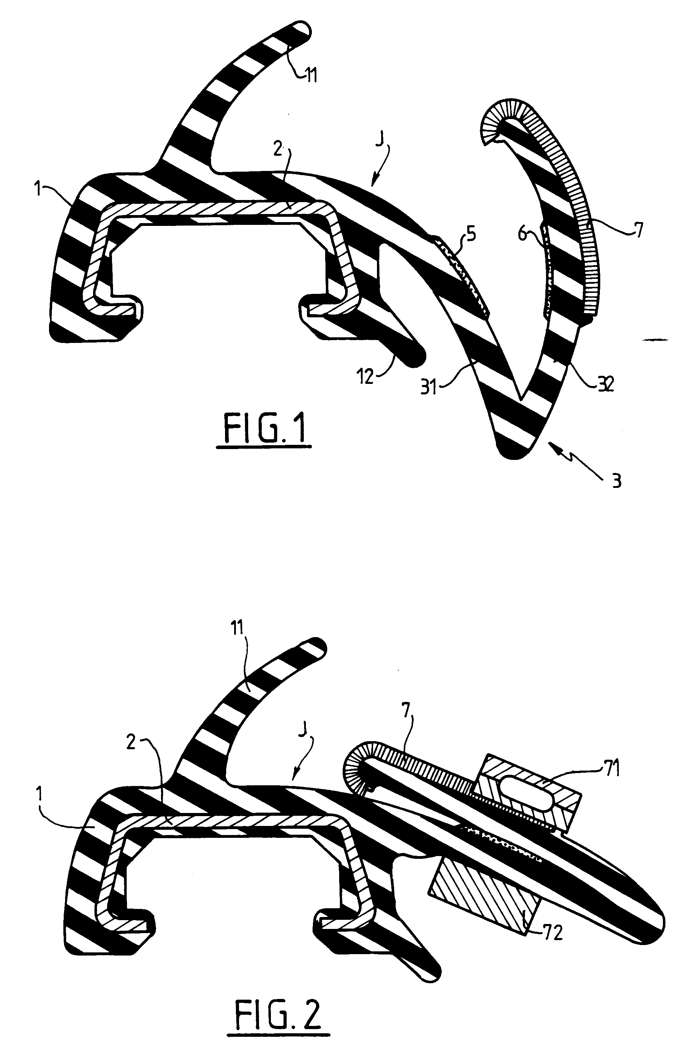

Etant donné que pour sa fixation sur une caisse de véhicule automobile ou une porte d'un tel véhicule, le joint doit être conformé comme montré sur la figure 2, c'est-à-dire avec les parties 31 et 32 solidarisées l'une de l'autre au moins en certains points de la longueur du joint, l'invention prévoit, pour ce faire, de disposer le long du joint J et en des zones en vis-à-vis des parties 31 et 32 de minces couches 5 et 6, respectivement, de polyéthylène non polaire rapportées après fabrication par extrusion du joint ou, de préférence, coextrudées avec celui-ci, puis de souder l'une à l'autre par un champ électrique haute fréquence les deux couches minces 5 et 6 des parties 31 et 32 du joint.

Un dispositif pour la mise en oeuvre du procédé comprend alors, le plus simplement, une électrode émettrice HF 72, fixe, et une électrode 71 climatisée, mobile, propre à se déplacer de bas en haut pour ainsi rabattre l'une sur l'autre les deux parties du joint et les maintenir au contact l'une de l'autre sous une pression de quelques kilos lors de l'application du champ haute fréquence.

Du fait de sa nature non polaire, le polyéthylène des couches 5 et 6 n'est pas chauffé directement par le rayonnement haute-fréquence (de l'ordre de 22 MHz), mais seulement chauffé indirectement par conduction thermique à partir du caoutchouc des parties 31, 32, l'électrode 72 délivrant une puissance localisée.

Le polyéthylène peut être remplacé par une autre matière plastique compatible avec le type de caoutchouc ou d'élastomère(s) thermoplastique(s) formant la pièce profilée.

A titre d'exemples non limitatifs, des couples élastomère/élastomère(s) thermoplastique(s) - matière plastique non polaire compatibles, propres à être mis en oeuvre dans le procédé selon l'invention peuvent être choisis parmi les couples : NBR/PVC - Polyéthylène, EPDM - polypropylène, EPDM/TPR - polypropylène.

Bien que le procédé décrit, dans le cas d'un joint garni de floc, fasse application d'un champ HF qui ne porte pas atteinte au floc, il peut être mis en oeuvre par impulsion d'énergie pour des profilés sans floc.

**Revendications**

1. Procédé de fabrication d'une pièce à base de matériau élastomère ou d'élastomère(s) thermoplastique(s) obtenue par extrusion d'une ébauche, puis solidarisation entre elles de deux zones au moins de ladite ébauche réalisée par soudure de deux couches minces de matière plastique non polaire rapportées sur lesdites zones ensuite rapprochées et amenées au contact l'une de l'autre, caractérisé en ce que ladite solidarisation est conduite en maintenant au contact lesdites couches minces (5, 6) simultanément à l'application d'un champ haute-fréquence ou d'une impulsion d'énergie.

2. Procédé selon la Revendication 1, caractérisé en ce que les couches minces (5, 6) de matière plastique non polaire sont coextrudées avec l'ébauche, le matériau constitutif de cette dernière étant choisi parmi les élastomères du type caoutchouc naturel ou synthétique, les élastomères thermoplastiques, ou les coupages de ces matières, tandis que le matériau des couches minces (5, 6) est une matière plastique non polaire compatible avec ledit élastomère ou élastomère(s) thermoplastique(s).

3. Procédé selon l'une quelconque des Revendications précédentes, caractérisé en ce que la matière plastique non polaire est choisie parmi les polyéthylènes.

4. Dispositif pour la soudure par haute-fréquence ou par impulsion d'énergie à deux mâchoires, dont l'une est une électrode émettrice HF, fixe, et l'autre une électrode climatisée, mobile, caractérisé en ce que pour la mise en oeuvre du procédé selon l'une quelconque des Revendications précédentes, les moyens (71, 72) qu'il comprend pour l'application du champ haute fréquence ou l'impulsion d'énergie sont également prévus pour maintenir au contact sous pression l'une contre l'autre les zones garnies des couches minces (5, 6) en matière plastique non polaire.

5.  Pièce à base de matériau élastomère, notamment en caoutchouc, ou d'élastomère(s) thermoplastique(s), comme un joint d'étanchéité comportant une lèvre (3) et un pied ou pince (1) de montage sur un support, obtenue par mise en oeuvre du procédé selon l'une quelconque des Revendications 1 à 3, caractérisée en ce qu'elle comporte en au moins deux zones en vis-à-vis des couches minces (5, 6) de matière plastique polaire coextrudées ou rapportées sur lesdites zones, puis soudées l'une à l'autre par utilisation de haute fréquence ou par impulsion d'énergie.

6.  Pièce selon la Revendication 5, caractérisée en ce que la matière plastique non polaire est un polyéthylène.

7.  Pièce selon la Revendication 5, caractérisée en ce que le caoutchouc ou les élastomères thermoplastiques sont choisis parmi les EPDM ou les coupages NBR/PVC ou EPDM/TPR, la matière plastique non polaire étant un polyéthylène ou un polypropylène.

FIG.1

FIG.2

Office européen
des brevets

**RAPPORT DE RECHERCHE EUROPEENNE**

Numero de la demande

EP   91 40 2464

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 196 267 (GOODYEAR)<br>* page 1, ligne 4 - ligne 9 *<br>* page 5, ligne 26 - page 6, ligne 21;<br>revendications; figures 2,4 * | 1,3 | B29C65/00<br>C08J5/12 |
| A | --- | 5-7 | |
| A | CA-A-1 188 970 (HATZIKELIS ET AL.)<br>* page 1, ligne 1 - ligne 19; revendications;<br>figure 2 * | 2 | |
| A | ---<br>US-A-2 941 575 (MALMBERG ET AL.)<br>* colonne 1, ligne 15 - ligne 70; figure 1 * | 4 | |
| A | ---<br>FR-A-2 090 052 (GLASURIT-WERKE)<br>* page 3, ligne 26 - ligne 34 * | 1 | |
| A | ---<br>EP-A-0 209 453 (HUTCHINSON)<br>--- | | |
| A | DE-A-3 316 301 (METZELER GMBH)<br>--- | | |
| A | NL-A-6 910 915 (ALLIED CHEMICAL CORP.)<br>----- | | **DOMAINES TECHNIQUES RECHERCHES (Int. Cl.5)**<br><br>B29C<br>C08J |

Le présent rapport a été établi pour toutes les revendications

| Lieu de la recherche | Date d'achèvement de la recherche | Examinateur |
|---|---|---|
| LA HAYE | 09 JANVIER 1992 | SOEDERBERG J.E. |

EPO FORM 1503 03.82 (P0402)